(19) Europäisches Patentamt
European Patent Office
Office européen des brevets

(11) EP 1 750 511 B1

(12) **EUROPÄISCHE PATENTSCHRIFT**

(45) Veröffentlichungstag und Bekanntmachung des Hinweises auf die Patenterteilung:
**17.10.2007 Patentblatt 2007/42**

(21) Anmeldenummer: **04739227.9**

(22) Anmeldetag: **17.05.2004**

(51) Int Cl.:
***A01N 43/90*** *(2006.01)* ***A01N 37/52*** *(2006.01)*

(86) Internationale Anmeldenummer:
**PCT/EP2004/005281**

(87) Internationale Veröffentlichungsnummer:
**WO 2005/112641 (01.12.2005 Gazette 2005/48)**

(54) **FUNGIZIDE MISCHUNGEN AUF DER BASIS VON OXIMETHERDERIVATEN**

FUNGICIDAL MIXTURES BASED ON OXIME ETHER DERIVATIVES

MELANGES FONGICIDES A BASE DE DERIVES D'ETHER D'OXIME

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**LT LV**

(43) Veröffentlichungstag der Anmeldung:
**14.02.2007 Patentblatt 2007/07**

(73) Patentinhaber: **BASF Aktiengesellschaft**
**67056 Ludwigshafen (DE)**

(72) Erfinder:
- **TORMO I BLASCO, Jordi**
**69514 Laudenbach (DE)**
- **GROTE, Thomas**
**67157 Wachenheim (DE)**
- **AMMERMANN, Eberhard**
**64646 Heppenheim (DE)**
- **STIERL, Reinhard**
**67251 Freinsheim (DE)**
- **STRATHMANN, Siegfried**
**67117 Limburgerhof (DE)**
- **SCHÖFL, Ulrich**
**68782 Brühl (DE)**

(56) Entgegenhaltungen:
**EP-A- 0 988 790**
**WO-A-00/36917**
**WO-A-98/46607**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft fungizide Mischungen, enthaltend

A) das Triazolopyrimidin der Formel I,

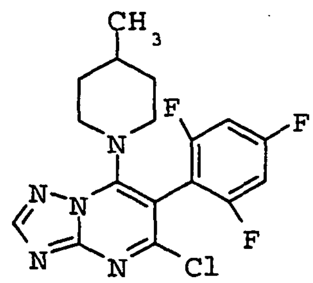

I

und

B) Oximetherderivate der Formel II

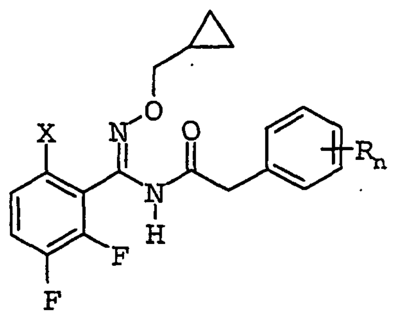

II

wobei der Index und die Substituenten folgende Bedeutung haben:

X $C_1$-Halogenalkyl oder $C_1$-Halogenalkoxy;

R Halogen, $C_1$-$C_4$-Alkyl, $C_1$-$C_4$-Halogenalkyl, $C_1$-$C_4$-Alkoxy oder $C_1$-$C_4$-Halogenalkoxy;

n 0, 1, 2 oder 3;

in einer synergistisch wirksamen Menge.

Außerdem betrifft die Erfindung Verfahren zur Bekämpfung von Schadpilzen mit Mischungen der Verbindungen I und II, sie enthaltende Mittel und die Verwendung der Verbindungen I und II zur Herstellung derartiger Mischungen.

Die Verbindung der Formel I, 5-Chlor-7-(4-methyl-pipiridin-l-yl)-6-(2,4,6-trifluor-phenyl)-[1,2,4]triazolo[1,5-a]pyrimidin, ihre Herstellung und ihre Wirkung gegen Schadpilze ist aus der Literatur bekannt (WO 98/46607).

Mischungen von Triazolopyrimidinen mit anderen Wirkstoffen sind aus EP-A 988 790 und US 6,268,371 bekannt.

Ebenfalls bekannt sind die Oximetherderivate der Formel II sowie Verfahren zu deren Herstellung (WO 96/19442, EP-A 10 17 670 und EP-A 10 17 671).

In WO 98/53689, WO 99/31980 und WO 00/36917 werden Mischungen der Oximetherderivate der Formel II mit anderen Wirkstoffen beschrieben.

Der vorliegenden Erfindung lag die Aufgabe zugrunde, besonders wirksame Mischungen zur Bekämpfung von Schadpilzen und insbesondere für bestimmte Indikationen zur Verfügung zu stellen.

Im Hinblick auf eine Senkung der Aufwandmengen und eine Verbreiterung des Wirkungsspektrums der bekannten Verbindungen I und II lagen der vorliegenden Erfindung Mischungen als Aufgabe zugrunde, die bei verringerter Gesamtmenge an ausgebrachten Wirkstoffen eine verbesserte Wirkung gegen Schadpilzen aufweisen (synergistische

Mischungen).

Demgemäß wurden die eingangs definierte Mischungen gefunden. Es wurde außerdem gefunden, daß sich bei gleichzeitiger, und zwar gemeinsamer oder getrennter Anwendung der Verbindungen I und der Verbindungen II oder bei Anwendung der Verbindungen I und der Verbindungen II nacheinander Schadpilze besser bekämpfen lassen, als mit den Einzelverbindungen allein.

Die erfindungsgemäßen Mischungen wirken synergistisch und sind daher zur Bekämpfung von Schadpilzen und insbesondere von echten Mehltaupilzen in Getreide, Gemüse, Obst, Zierpflanzen und Reben besonders geeignet.

Bevorzugt enthalten die erfindungsgemäßen Mischungen die Verbindung der Formel I und eine Verbindung der Formel II als aktive Komponenten.

Unter den Verbindungen der Formel II sind solche bevorzugt, bei denen X für eine Trifluormethyl- oder eine Difluormethoxygruppe steht. Daneben sind Verbindungen der Formel II besonders bevorzugt, in denen der Index n gleich Null ist.

Besonders bevorzugte Verbindungen II sind insbesondere die in der nachfolgenden Tabelle 1 aufgeführten Verbindungen:

Tabelle 1:

| Nr. | X | $R_n$ |
|---|---|---|
| II.1 | $CF_3$ | H |
| II.2 | $CHF_2$ | H |
| II.3 | $CF_3$ | 4-$OCH_3$ |
| II.4 | $CHF_2$ | 4-$OCH_3$ |
| II.5 | $CF_3$ | 4-F |
| II.6 | $CHF_2$ | 4-F |
| II.7 | $CF_3$ | 4-Cl |
| II.8 | $CHF_2$ | 4-Cl |
| II.9 | $CF_3$ | 4-$CH_3$ |
| II.10 | $CHF_2$ | 4-$CH_3$ |
| II .11 | $CF_3$ | 4-$CF_3$ |
| II.12 | $CHF_2$ | 4-$CF_3$ |
| II.13 | $OCF_3$ | H |
| II.14 | $OCHF_2$ | H |
| II.15 | $OCH_2F$ | H |
| II.16 | $OCF_3$ | 4-$OCH_3$ |
| II.17 | $OCHF_2$ | 4-$OCH_3$ |
| II.18 | $OCH_2F$ | 4-$OCH_3$ |
| II.19 | $OCF_3$ | 4-F |
| II.20 | $OCHF_2$ | 4-F |
| II.21 | $OCH_2F$ | 4-F |
| II.22 | $OCF_3$ | 4-Cl |
| II.23 | $OCHF_2$ | 4-Cl |
| II.24 | $OCH_2F$ | 4-Cl |
| II.25 | $OCF_3$ | 4-$CH_3$ |
| II.26 | $OCHF_2$ | 4-$CH_3$ |
| II.27 | $OCH_2F$ | 4-$CH_3$ |
| II.28 | $OCF_3$ | 4-$CF_3$ |

(fortgesetzt)

| Nr. | X | $R_n$ |
|---|---|---|
| II.29 | $OCHF_2$ | 4-$CF_3$ |
| II.30 | $OCH_2F$ | 4-$CF_3$ |

Zur Verwendung in den erfindungsgemäßen Mischungen sind die Verbindungen II.1 und, insbesondere, II.14 bevorzugt.

Das Mengenverhältnis der Verbindungen I und II kann in weiten Bereichen variiert werden; vorzugsweise werden die Wirkstoffe in einem Gewichtsverhältnis im Bereich von 100:1 bis 1:50, bevorzugt 50:1 bis 1:2, insbesondere 20:1 bis 1:1 eingesetzt.

Bevorzugt setzt man bei der Bereitstellung der Mischungen die reinen Wirkstoffe I und II ein, denen man weitere Wirkstoffe gegen Schadpilze oder gegen andere Schädlinge wie Insekten, Spinntiere oder Nematoden oder auch herbizide oder wachstumsregulierende Wirkstoffe oder Düngemittel beimischen kann.

Die Mischungen aus den Verbindungen I und II bzw. die Verbindungen I und II gleichzeitig, gemeinsam oder getrennt angewandt, zeichnen sich durch eine hervorragende Wirkung gegen ein breites Spektrum von pflanzenpathogenen Pilzen, insbesondere aus der Klasse der Ascomyceten, Basidiomyceten und Deuteromyceten aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen, Tomaten, Kartoffeln und Kürbisgewächse), Gerste, Gras, Hafer, Bananen, Kaffee, Mais, Obstpflanzen, Reis, Roggen, Soja, Wein, Weizen, Zierpflanzen, Zuckerrohr sowie an einer Vielzahl von Samen.

Insbesondere eignen sie sich zur Bekämpfung der folgenden pflanzenpathogenen Pilze: *Blumeria graminis* (echter Mehltau) an Getreide, *Erysiphe cichoracearum* und *Sphaerotheca fuliginea* an Kürbisgewächsen, *Podosphaera leucotricha* an Äpfeln, *Uncinula necator* an Reben, *Puccinia*-Arten an Getreide, *Rhizoctonia*-Arten an Baumwolle, Reis und Rasen, *Ustilago-Arten* an Getreide und Zuckerrohr, *Venturia inaequalis* an Äpfeln, *Bipolaris*- und *Drechslera*-Arten an Getreide, Reis und Rasen, *Septoria*-Arten an Weizen, *Botrytis cinerea* an Erdbeeren, Gemüse, Zierpflanzen und Reben, *Mycosphaerella*-Arten an Bananen, Erdnüssen und Getreide, *Pseudocercosporella herpotrichoides* an Weizen und Gerste, *Pyricularia oryzae* an Reis, *Phytophthora infestans* an Kartoffeln und Tomaten, *Pseudoperonospora*-Arten an Kürbisgewächsen und Hopfen, *Plasmopara viticola* an Reben, *Alternaria*-Arten an Gemüse und Obst sowie *Fusarium*- und *Verticillium*-Arten.

Die Verbindungen I und II können gleichzeitig, und zwar gemeinsam oder getrennt, oder nacheinander aufgebracht werden, wobei die Reihenfolge bei getrennter Applikation im allgemeinen keine Auswirkung auf den Bekämpfungserfolg hat.

Die Aufwandmengen der erfindungsgemäßen Mischungen liegen, vor allem bei landwirtschaftlichen Kulturflächen, je nach Art des gewünschten Effekts bei 5 bis 2000 g/ha, vorzugsweise 50 bis 1500 g/ha, insbesondere 50 bis 750 g/ha.

Die Aufwandmengen liegen dabei für die Verbindung I bei 10 bis 1000 g/ha, vorzugsweise 20 bis 750 g/ha, insbesondere 20@@@@ bis 500 g/ha.

Die Aufwandmengen für die Verbindungen II liegen entsprechend bei 5 bis 1500 g/ha vorzugsweise 10 bis 750 g/ha, insbesondere 20 bis 500 g/ha.

Bei der Saatgutbehandlung werden im allgemeinen Aufwandmengen an Mischung von 0,001 bis 1 g/kg Saatgut, vorzugsweise 0,01 bis 0,5 g/kg, insbesondere 0,01 bis 0,1 g/kg verwendet.

Sofern für Pflanzen pathogene Schadpilze zu bekämpfen sind, erfolgt die getrennte oder gemeinsame Applikation der Verbindungen I und II oder der Mischungen aus den Verbindungen I und II durch Besprühen oder Bestäuben der Samen, der Pflanzen oder der Böden vor oder nach der Aussaat der Pflanzen oder vor oder nach dem Auflaufen der Pflanzen.

Beispiele für Formulierungen sind:

1. Produkte zur Verdünnung in Wasser

A) Wasserlösliche Konzentrate (SL)

10 Gew.-Teile der Wirkstoffe werden in Wasser oder einem wasserlöslichen Lösungsmittel gelöst. Alternativ werden Netzmittel oder andere Hilfsmittel zugefügt. Bei der Verdünnung in Wasser löst sich der Wirkstoff.

B) Dispergierbare Konzentrate (DC)

20 Gew.-Teile der Wirkstoffe werden in Cyclohexanon unter Zusatz eines Dispergiermittels z.B. Polyvinylpyrrolidon gelöst. Bei Verdünnung in Wasser ergibt sich eine Dispersion.

C) Emulgierbare Konzentrate (EC)

15 Gew.-Teile der Wirkstoffe werden in Xylol unter Zusatz von Ca-Dodecylbenzolsulfonat und Ricinusölethoxylat (jeweils 5 %) gelöst. Bei der Verdünnung in Wasser ergibt sich eine Emulsion.

D) Emulsionen (EW, EO)

40 Gew.-Teile der Wirkstoffe werden in Xylol unter Zusatz von Ca-Dodecylbenzolsulfonat und Ricinusölethoxylat (jeweils 5 %) gelöst. Diese Mischung wird mittels einer Emulgiermaschine (Ultraturax) in Wasser eingebracht und zu einer homogenen Emulsion gebracht. Bei der Verdünnung in Wasser ergibt sich eine Emulsion.

E) Suspensionen (SC, OD)

20 Gew.-Teile der Wirkstoffe werden unter Zusatz von Dispergier- und Netzmitteln und Wasser oder einem organischen Lösungsmittel in einer Rührwerkskugelmühle zu einer feinen Wirkstoffsuspension zerkleinert. Bei der Verdünnung in Wasser ergibt sich eine stabile Suspension des Wirkstoffs.

F) Wasserdispergierbare und wasserlösliche Granulate (WG, SG)

50 Gew.-Teile der Wirkstoffe werden unter Zusatz von Dispergier- und Netzmitteln fein gemahlen und mittels technischer Geräte (z.B. Extrusion, Sprühturm, Wirbelschicht) als wasserdispergierbare oder wasserlösliche Granulate hergestellt. Bei der Verdünnung in Wasser ergibt sich eine stabile Dispersion oder Lösung des Wirkstoffs.

G) Wasserdispergierbare und wasserlösliche Pulver (WP, SP)

75 Gew.-Teile der Wirkstoffe werden unter Zusatz von Dispergier- und Netzmitteln sowie Kieselsäuregel in einer Rotor-Strator Mühle vermahlen. Bei der Verdünnung in Wasser ergibt sich eine stabile Dispersion oder Lösung des Wirkstoffs.

3. Produkte für die Direktapplikation

H) Stäube (DP)

5 Gew.Teile der Wirkstoffe werden fein gemahlen und mit 95 % feinteiligem Kaolin innig vermischt. Man erhält dadurch ein Stäubmittel.

I) Granulate (GR, FG, GG, MG)

0.5 Gew-Teile der Wirkstoffe werden fein gemahlen und mit 95.5 % Trägerstoffe verbunden. Gängige Verfahren sind dabei die Extrusion, die Sprühtrocknung oder die Wirbelschicht. Man erhält dadurch ein Granulat für die Direktapplikation.

J) ULV- Lösungen (UL)

10 Gew.-Teile der Wirkstoffe werden in einem organischen Lösungsmittel z.B. Xylol gelöst. Dadurch erhält man ein Produkt für die Direktapplikation.
Die Wirkstoffe können als solche, in Form ihrer Formulierungen oder den daraus bereiteten Anwendungsformen, z.B. in Form von direkt versprühbaren Lösungen, Pulvern, Suspensionen oder Dispersionen, Emulsionen, Öldispersionen, Pasten, Stäubmitteln, Streumitteln, Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.
Wässrige Anwendungsformen können aus Emulsionskonzentraten, Pasten oder netzbaren Pulvern (Spritzpulver, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermitttel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Die Wirkstoffkonzentrationen in den anwendungsfertigen Zubereitungen können in größeren Bereichen variiert werden. Im allgemeinen liegen sie zwischen 0,0001 und 10%, vorzugsweise zwischen 0,01 und 1%.

Die Wirkstoffe können auch mit gutem Erfolg im Ultra-Low-Volume-Verfahren (ULV) verwendet werden, wobei es möglich ist, Formulierungen mit mehr als 95 Gew.-% Wirkstoff oder sogar den Wirkstoff ohne Zusätze auszubringen.

Zu den Wirkstoffen können Öle verschiedenen Typs, Netzmittel, Adjuvants, Herbizide, Fungizide, andere Schädlingsbekämpfungsmittel, Bakterizide, gegebenenfalls auch erst unmittelbar vor der Anwendung (Tankmix), zugesetzt werden. Diese Mittel können zu den erfindungsgemäßen Mitteln im Gewichtsverhältnis 1:10 bis 10:1 zugemischt werden.

Anwendungsbeispiele

Die synergistische Wirkung der erfindungsgemäßen Mischungen läßt sich durch die folgenden Versuche zeigen:

Die Wirkstoffe wurden getrennt oder gemeinsam als eine Stammlösung aufbereitet mit 0,25 Gew.-% Wirkstoff in Aceton oder DMSO. Dieser Lösung wurde 1 Gew.-% Emulgator Uniperol® EL (Netzmittel mit Emulgier- und Dispergierwirkung auf der Basis ethoxylierter Alkylphenole) zugesetzt und entsprechend der gewünschten Konzentration mit Wasser verdünnt.

Die Auswertung erfolgt durch Feststellung der befallenen Blattflächen in Prozent. Diese Prozent-Werte werden in Wirkungsgrade umgerechnet. Der Wirkungsgrad (**W**) wird nach der Formel von Abbot wie folgt bestimmt:

$$W = (1 - \alpha/\beta) \cdot 100$$

α entspricht dem Pilzbefall der behandelten Pflanzen in % und
β entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 wiesen die behandelten Pflanzen keinen Befall auf.

Die zu erwartenden Wirkungsgrade der Wirkstoffmischungen werden nach der Colby Formel [R.S. Colby, Weeds 15, 20-22 (1967)] ermittelt und mit den beobachteten Wirkungsgraden verglichen.

$$\text{Colby Formel: } E = x + y - x \cdot y/100$$

E zu erwartender Wirkungsgrad, ausgedrückt in % der unbehandelten Kontrolle, beim Einsatz der Mischung aus den Wirkstoffen A und B in den Konzentrationen a und b
x der Wirkungsgrad, ausgedrückt in % der unbehandelten Kontrolle, beim Einsatz des Wirkstoffs A in der Konzentration a
y der Wirkungsgrad, ausgedrückt in % der unbehandelten Kontrolle, beim Einsatz des Wirkstoffs B in der Konzentration b.

Beispiel 1 - Kurative Wirksamkeit gegen Weizenbraunrost verursacht durch *Puccinia recondita*

Blätter von in Töpfen gewachsenen Weizensämlingen der Sorte "Kanzler" wurden mit Sporen des Braunrostes *(Puccinia recondita)* bestäubt. Danach wurden die Töpfe für 24 Stunden in eine Kammer mit hoher Luftfeuchtigkeit (90 bis 95 %) und 20 bis 22°C gestellt. Während dieser Zeit keimten die Sporen aus und die Keimschläuche drangen in das Blattgewebe ein. Die infizierten Pflanzen wurden am nächsten Tag mit einer wässriger Suspension in der unten angegebenen Wirkstoffkonzentration bis zur Tropfnässe besprüht. Nach dem Antrocknen des Spritzbelages wurden die Versuchspflanzen im Gewächshaus bei Temperaturen zwischen 20 und 22°C und 65 bis 70 % relativer Luftfeuchte für 7 Tage kultiviert. Dann wurde das Ausmaß der Rostpilzentwicklung auf den Blättern ermittelt.

Tabelle A - Einzelwirkstoffe

| Versuch Nr. | Wirkstoff | Konzentration in der Spritzbrühe [ppm] | Wirkungsgrad in % der unbehandelten Kontrolle |
|---|---|---|---|
| 1 | Kontrolle (umbehandelt) | (90 % Befall) | 0 |
| 2 | I | 4 | 89 |
| 3 | II.14 | 1<br>0,25<br>0,06 | 0<br>0<br>0 |

Tabelle B - erfindungsgemäße Kombinationen

| Versuch Nr. | Wirkstoffmischung Konzentration Mischungsverhältnis | beobachteter Wirkungsgrad | berechneter Wirkungsgrad*) |
|---|---|---|---|
| 4 | I + II.14<br>4 + 0,25 ppm<br>16 : 1 | 97 | 89 |
| 5 | I + II.14<br>1 + 0,06 ppm<br>16 : 1 | 22 | 0 |
| 6 | I + II.14<br>4 + 1 ppm<br>4 : 1 | 99 | 89 |
| 7 | I + II.14<br>1 + 0,25 ppm<br>4 : 1 | 33 | 0 |
| 8 | I + II.14<br>1 + 1 ppm<br>1 : 1 | 67 | 0 |
| *) berechneter Wirkungsgrad nach der Colby-Formel | | | |

Beispiel 2 - Wirksamkeit gegen Weizenmehltau verursacht durch *Erysiphe* [syn. *Blumeria*] *graminis* forma specialis. *tritici*

Blätter von in Töpfen gewachsenen Weizenkeimlingen der Sorte "Kanzler" wurden mit wässriger Suspension in der unten angegebenen Wirkstoffkonzentration bis zur Tropfnässe besprüht. 24 Stunden nach dem Antrocknen des Spritzbelages mit Sporen des Weizenmehltaus (*Erysiphe* [syn. *Blumeria*] *graminis* forma specialis *tritici*) bestäubt. Die Versuchspflanzen wurden anschließend im Gewächshaus bei Temperaturen zwischen 20 und 24°C und 60 bis 90 % relativer Luftfeuchtigkeit aufgestellt. Nach 7 Tagen wurde das Ausmaß der Mehltauentwicklung visuell in % Befall der gesamten Blattfläche ermittelt.

Tabelle C - Einzelwirkstoffe

| Versuch Nr. | Wirkstoff | Konzentration in der Spritzbrühe [ppm] | Wirkungsgrad in % der unbehandelten Kontrolle |
|---|---|---|---|
| 9 | Kontrolle (unbehandelt) | (99 % Befall) | 0 |
| 10 | 1 | 4<br>1<br>0,25 | 60<br>9<br>0 |

(fortgesetzt)

| Versuch Nr. | Wirkstoff | Konzentration in der Spritzbrühe [ppm] | Wirkungsgrad in % der unbehandelten Kontrolle |
|---|---|---|---|
| 11 | II.1 | 0,25 | 70 |

Tabelle D - erfindungsgemäße Kombinationen

| Versuch Nr. | Wirkstoffmischung Konzentration Mischungsverhältnis | beobachteter Wirkungsgrad | berechneter Wirkungsgrad*) |
|---|---|---|---|
| 12 | I + II.1<br>4 + 0,25 ppm<br>16 : 1 | 98 | 88 |
| 13 | I + II.1<br>1 + 0,25 ppm<br>4 : 1 | 95 | 73 |
| 14 | I + II.1<br>0,25 + 0,25 ppm<br>1 : 1 | 95 | 70 |
| *) berechneter Wirkungsgrad nach der Colby-Formel | | | |

Aus den Ergebnissen der Versuche geht hervor, daß der beobachtete Wirkungsgrad der erfindungsgemäßen Mischungen in allen Mischungsverhältnissen deutlich höher ist, als nach der Colby-Formel vorausberechnet.

## Patentansprüche

**1.** Fungizide Mischungen, enthaltend

A) das Triazolopyrimidin der Formel I,

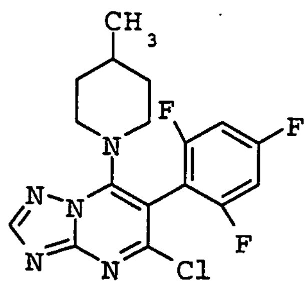

I

und
B) Oximetherderivate der Formel II,

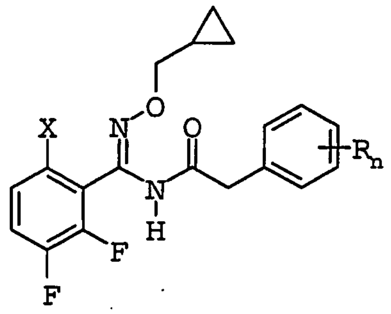

II

wobei der Index und die Substituenten folgende Bedeutung haben:

X $C_1$-Halogenalkyl oder $C_1$-Halogenalkoxy;
R Halogen, $C_1$-$C_4$-Alkyl, $C_1$-$C_4$-Halogenalkyl, $C_1$-$C_4$-Alkoxy oder $C_1$-$C_4$-Halogenalkoxy;
n 0, 1, 2 oder 3;

in einer synergistisch wirksamen Menge.

2. Fungizide Mischungen nach Anspruch 1, **dadurch gekennzeichnet, daß** das Gewichtsverhältnis der Verbindung I zu den Oximetherderivaten der Formel II 100:1 bis 1:50 beträgt.

3. Fungizide Mischungen gemäß Ansprüchen 1 oder 2, enthaltend das Oximetherderivat N-[Cyclopropylmethoxyimino-(2,3-difluor-6-trifluormethyl-phenyl)-methyl]-2-phenyl-acetamid II.1:

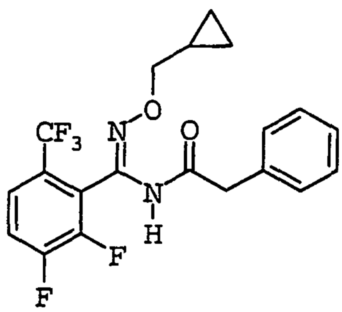

II.1

4. Fungizide Mischungen gemäß Ansprüchen 1 oder 2, enthaltend das Oximetherderivat N-[Cyclopropylmethoxyimino-(6-difluormethoxy-2,3-difluor-phenyl)-methyl]-2-phenyl-acetamid II.14:

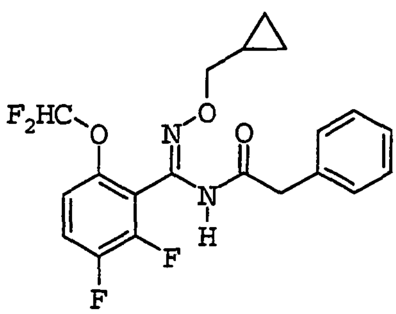

II.14

5. Fungizide Mittel, enthaltend die fungiziden Mischungen gemäß einem der Ansprüche 1 bis 4 sowie einen festen oder flüssigen Träger.

6. Verfahren zur Bekämpfung von pflanzenpathogenen Schadpilzen, **dadurch gekennzeichnet, daß** man die Schadpilze, deren Lebensraum oder die von ihnen freizuhaltenden Pflanzen, Samen, Böden, Flächen, Materialien oder

Räume mit synergistisch wirkenden Mengen der Verbindung der Formel I gemäß Anspruch 1 und Oximetherderivaten der Formel II gemäß der Anspruch 1 oder den Mitteln gemäß Anspruch 3 behandelt.

7. Verfahren nach Anspruch 6, **dadurch gekennzeichnet, daß** man die Verbindung der Formel I gemäß Anspruch 1 und Oximetherderivate der Formel II gemäß Anspruch 1 gleichzeitig, und zwar gemeinsam oder getrennt, oder nacheinander ausbringt.

8. Verfahren nach Ansprüchen 6 oder 7, **dadurch gekennzeichnet, daß** man die Verbindung der Formel I gemäß Anspruch 1 in einer Menge von 0,01 bis 2,5 kg/ha aufwendet.

9. Verfahren nach den Ansprüchen 6 oder 7, **dadurch gekennzeichnet, daß** man die Oximetherderivate der Formel II gemäß Anspruch 1 in einer Menge von 0,01 bis 1 kg/ha aufwendet.

10. Verfahren nach Ansprüchen 6 oder 7, **dadurch gekennzeichnet, dass** man die Verbindungen I und II gemäß einem der Ansprüche 1 bis 4 in einer Menge von 0,001 bis 1 g/kg Saatgut anwendet.

11. Saatgut, enthaltend die Mischung gemäß einem der Ansprüche 1 bis 4 in einer Menge von 0,001 bis 1 g/kg.

12. Verwendung der Verbindungen I und II gemäß Anspruch 1 zur Herstellung eines zur Bekämpfung von Schadpilzen geeigneten Mittels.

**Claims**

1. A fungicidal mixture, comprising

A) the triazolopyrimidine of the formula I

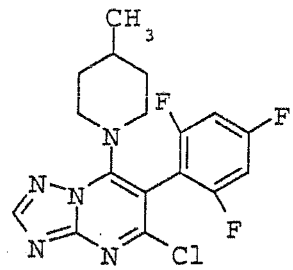

I

and

B) oxime ether derivatives of the formula II

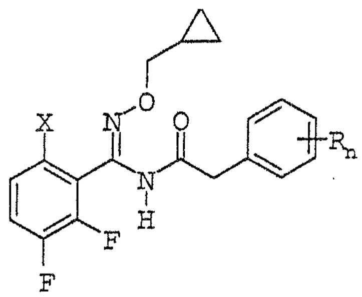

II

where the index and the substituents are as defined below:

X is $C_1$-haloalkyl or $C_1$-haloalkoxy;

R is halogen, $C_1$-$C_4$-alkyl, $C_1$-$C_4$-haloalkyl, $C_1$-$C_4$-alkoxy or $C_1$-$C_4$-haloalkoxy;
n is 0, 1, 2 or 3;

in a synergistically effective amount.

2. The fungicidal mixture according to claim 1, wherein the weight ratio of the compound I to the oxime ether derivatives of the formula II is from 100:1 to 1:50.

3. The fungicidal mixture according to claim 1 or 2, comprising the oxime ether derivative N-[cyclopropylmethoxyimino-(2,3-difluoro-6-trifluoromethylphenyl) methyl]-2-phenylacetamide II.1:

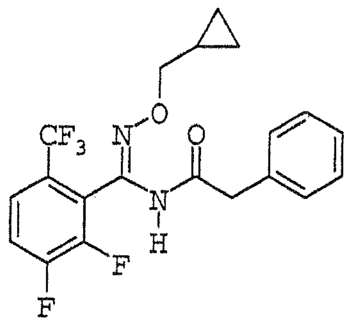

II.1

4. The fungicidal mixture according to claim 1 or 2, comprising the oxime ether derivative N-[cyclopropylmethoxyimino-(6-difluoromethoxy-2,3-difluorophenyl)methyl]-2-phenylacetamide II.14:

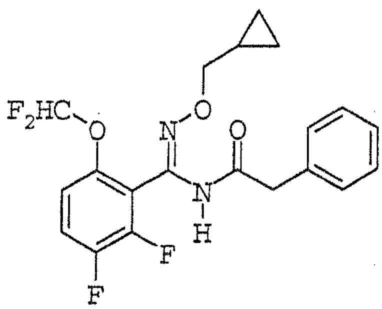

II.14

5. A fungicidal composition, comprising the fungicidal mixture according to one of claims 1 to 4 and a solid or liquid carrier.

6. A method for controlling phytopathogenic harmful fungi, which comprises treating the harmful fungi, their habitat or the plants, seeds, soils, areas, materials or spaces to be kept free from them with synergistically effective amounts of the compound of the formula I according to claim 1 and oxime ether derivatives of the formula II according to claim 1 or a composition according to claim 3.

7. The method according to claim 6, wherein the compound of the formula I according to claim 1 and oxime ether derivatives of the formula II according to claim 1 are applied simultaneously, that is jointly or separately, or in succession.

8. The method according to claim 6 or 7, wherein the compound of the formula I according to claim 1 is applied in an amount of from 0.01 to 2.5 kg/ha.

9. The method according to claim 6 or 7, wherein the oxime ether derivatives of the formula II according to claim 1 are applied in an amount of from 0.01 to 1 kg/ha.

10. The method according to claim 6 or 7, wherein the compounds I and II according to any of claims 1 to 4 are applied in an amount of from 0.001 to 1 g/kg of seed.

**11.** Seed, comprising the mixture according to any of claims 1 to 4 in an amount of from 0.001 to 1 g/kg.

**12.** The use of the compounds I and II according to claim 1 for preparing a composition suitable for controlling harmful fungi.

**Revendications**

**1.** Mélanges fongicides contenant

A) la triazolopyrimidine de formule I

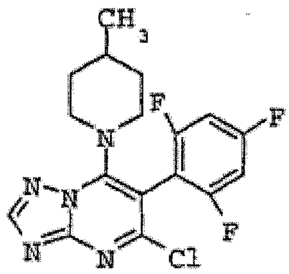

et
B) des dérivés d'éther d'oxime de formule II

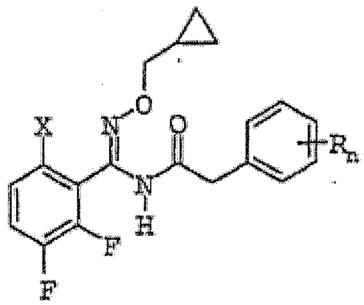

l'indice et les substituants ayant la signification suivante :

X $C_1$-halogénoalkyle ou $C_1$-halogénoalcoxy,
R un halogène, un radical $C_1$-$C_4$-alkyle, $C_1$-$C_4$-halogénoalkyle, $C_1$-$C_4$-alcoxy ou $C_1$-$C_4$-halogénoalcoxy,
n 0, 1, 2 ou 3,

dans une quantité active par synergie.

**2.** Mélanges fongicides selon la revendication 1, **caractérisés en ce que** le rapport pondéral du composé I aux dérivés d'éther d'oxime de formule II va de 100:1 à 1:50.

**3.** Mélanges fongicides selon l'une des revendications 1 ou 2, contenant le dérivé d'éther d'oxime N-[cyclopropylméthoxyimino-(2,3-difluoro-6-trifluorométhylphényl)-méthyl]-2-phénylacétamide II.1 :

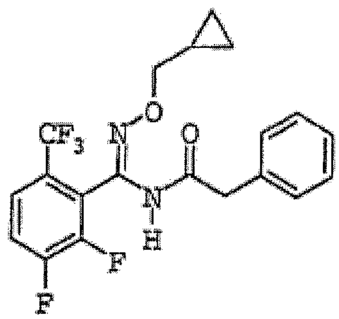

II.1

4. Mélanges fongicides selon l'une des revendications 1 ou 2, contenant le dérivé d'éther d'oxime N-[cyclopropylméthoxyimino-(6-difluorométhoxy-2,3-difluorophényl)-méthyl]-2-phénylacétamide II.14 :

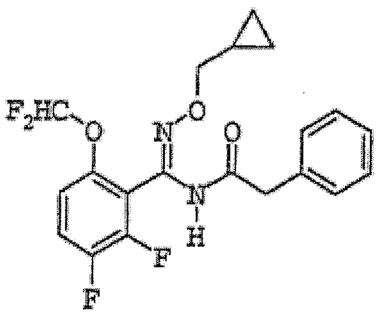

II.14

5. Moyen fongicide contenant les mélanges fongicides selon l'une des revendications 1 à 4 ainsi qu'un support solide ou liquide.

6. Procédé de lutte contre les champignons nocifs pathogènes pour les plantes, **caractérisé en ce que** l'on traite des champignons nocifs dont le biotope ou les plantes, semences, sols, surfaces, matériaux ou espaces à en préserver avec des quantités à action synergique du composé de formule I selon la revendication 1 et les dérivés d'éther d'oxime de formule II selon la revendication 1 ou les moyens selon la revendication 3.

7. Procédé selon la revendication 6, **caractérisé en ce que** l'on applique simultanément, et ce ensemble ou séparément, ou successivement le composé de formule I conformément à la revendication 1 et les dérivés d'éther d'oxime de formule II conformément à la revendication 1.

8. Procédé selon l'une des revendications 6 ou 7, **caractérisé en ce que** l'on applique le composé de formule I conformément à la revendication 1 dans une quantité de 0,01 à 2,5 kg/ha.

9. Procédé selon l'une des revendications 6 ou 7, **caractérisé en ce que** l'on applique les dérivés d'éther d'oxime de formule II conformément à la revendication 1 dans une quantité de 0,01 à 1 kg/ha.

10. Procédé selon l'une des revendications 6 ou 7, **caractérisé en ce que** l'on applique les composés I et II conformément à l'une des revendications 1 à 4 dans une quantité de 0,001 à 1 g/kg de semences.

11. Semence contenant le mélange conformément à l'une des revendications 1 à 4, dans une quantité de 0,001 à 1 g/kg.

12. Utilisation des composés I et II conformément à la revendication 1 pour la préparation d'un moyen convenant pour la lutte contre les champignons nocifs.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 9846607 A
- EP 988790 A
- US 6268371 B
- WO 9619442 A
- EP 1017670 A
- EP 1017671 A
- WO 9853689 A
- WO 9931980 A
- WO 0036917 A


### In der Beschreibung aufgeführte Nicht-Patentliteratur


- **R.S. COLBY.** *Weeds,* 1967, vol. 15, 20-22